# EUROPEAN PATENT APPLICATION

(11) **EP 2 743 860 A1**
(43) Date of publication of application: **18.06.2014**
(21) Application number: 12290433.7
(22) Date of filing: 12.12.2012
(51) Int. Cl.: G06F 21/62

(54) **Method of protecting data stored in an electronic database**

(71) Applicant: Alcatel Lucent, 75007 Paris (FR)
(72) Inventor: Aydin, Osman, 70569 Stuttgart (DE)
(74) Representative: Zinsinger, Norbert

(57) **Abstract**

The present invention concerns a method of protecting data stored in an electronic database (100), a device (350), which preferably comprises a processing unit (210) processing a computer program product and the electronic database (100) for use in the method. The method comprises the steps of providing at least one entry in the electronic database (100) to the stored data, the at least one entry indicating an extent of permitted usage of the stored data, determining (303, 304) by means of the at least one entry, if a request (302) for accessing the stored data is in accordance with the extent of permitted usage of the stored data and denying (306) the access to the stored data, if the request (302) is not in accordance with the extent of permitted usage.

## Description

### Background of the Invention

In electronic applications, for example in the internet environment, data are often stored which are related to particular, individual persons. The data might be termed as personal data. However, in many applications, the persons to which the data are related can not control how their personal data are used. For example, the persons of whom personal data are stored in an e-mail address book of somebody, can not control what some one else, in particular the holder of the e-mail address book, does with their personal data. For example, if the holder of this e-mail address book joins a social platform, the holder of the e-mail address book might give the consent that the provider of the social platform access his e-mail address book and the provider might thereby have access to the personal data stored in the e-mail address book, even to those personal data which are related to persons different from the holder of the e-mail address book.

### Summary of the Invention

The present invention aims to enhance the data privacy protection and data security in electronic and in particular internet environments, for example for the personal data stored in an e-mail address book, in particular for the data which are related to persons and/or entities different from the holder of the e-mail address book.

The objective of the present invention is achieved by a method of protecting data stored in an electronic database. The method comprises the steps of providing at least one entry in the electronic database to the stored data, the entry indicating an extent of permitted usage of the stored data, of determining by means of the entry, if a request for accessing the stored data is in accordance with the extent of permitted usage of the stored data and of denying the access to the stored data, if the request is not in accordance with the extent of permitted usage. A database is to be understood as any kind of data storage or memory. The objective of the present invention is further achieved by a device for controlling the access to data stored in an electronic database, the device being adapted to determine by means of at least one entry provided to the stored data and indicating an extent of permitted usage of the stored data, if a request for accessing the stored data is in accordance with the extent of permitted usage of the stored data and to deny the access to the stored data, if the request is not in accordance with the extent of permitted usage. The objective of the present invention is further achieved by a computer program product adapted to execute the method of protecting data stored in an electronic database, when executed on a computer.

The present invention advantageously achieves to enhance data privacy protection for data stored in electronic databases. Further, the present invention improves data security in electronic and internet environment.

Further advantages of the present invention are achieved by embodiments of the present invention. Unless otherwise derivable by the context, the embodiments are not to be understood as being exclusive, but as being combinable thereby forming further embodiments.

In a preferred embodiment, the at least one entry indicating an extent of permitted usage of the stored data comprises one or more persons and/or entities which are permitted to access, in particular to forward, the stored data or a portion of the stored data. Alternatively or in addition the at least one entry comprises one or more persons and/or entities, to which the stored and accessed data are permitted to be forwarded, one or more applications for which the stored data are permitted to be accessed and/or processed, in particular forwarded and/or one or more types and/or portions of the stored data which are permitted to be accessed and/or processed, in particular forwarded.

In a preferred embodiment, the step of providing at least one entry in the electronic database comprises determining the extent of permitted usage of the data stored in the electronic database, setting the at least one entry to the data stored in the electronic database based on the determined extent of permitted usage.

In a preferred embodiment, the step of determining the extent of permitted usage of the data stored in the electronic database further comprises to send a request to the one or more persons and/or entities to whom the data stored in the electronic database are related, Thereby, the one or more persons and/or entities are requested to send an acknowledgement message defining the extent of permitted usage of the data related to said one or more persons and/or entities. This acknowledgement message from the one or more persons and/or entities to whom the data stored in the electronic database are related is received and is used to derive out of the acknowledgement message the extent of permitted usage of the data stored in the database.

In a preferred embodiment, the step of providing at least one entry to the data stored in the electronic database based on the determined extent of permitted usage further comprises the step of presetting at least one entry to the data stored in the electronic database before determining the extent of permitted usage of the data stored in the electronic database. The presetting of entries into the electronic database might comprise to set an entry that the data stored in electronic database are not permitted to be accessed by a person or entity different from the person who stored the data into the electronic database until a more specified entry including a kind of permission is provided. Alternatively or in addition, the presetting of an entry to data might comprise to store the data into the database, in case the data are not yet stored.

In a preferred embodiment, wherein the step of providing at least one entry in the electronic database comprises to derive the extent of permitted usage out of an indication of the permitted extent of usage received in connection with the data to be stored in the electronic database, to store in the electronic database the received data, which are to be stored in the electronic database, and to set the at least one entry to said data based on the extent of permitted usage derived out of the indication.

In an exemplary embodiment, the extent of permitted usage can be derived out of an indication of the permitted extent to each kind of data provided by the one or more persons and/or entities to whom the data are related, wherein the indication is provided contemporaneously with the providing of the personal data which are then stored in the electronic database. In particular, the data which are to be stored into the electronic database might be provided via an electronic card, e.g. electronic business card or visiting card, e.g. "vCard". This exemplary electronic business card including the data to be stored and the extent of permitted usage might be provided D2D (D2D = device to device), e.g. by e-mail, in particular e-mail attachment, via Bluetooth or any infrared communication, WLAN or by any further way. The electronic business card comprises the data to be stored in the electronic database and also the extent of permitted usage for each kind or type of data which are comprised by the electronic business card. Based on the information given by the electronic business card, the data related to e.g. the person to whom the electronic business card belongs, are stored in the electronic database of e.g. the holder of the e-mail account and e-mail address book who has received the electronic business card, e.g. via e-mail. To the data stored in the electronic database, e.g. in the e-mail address book of the holder of the e-mail account, the extent of permitted usage is indicated by one or more entries provided to the stored data and derived out of the corresponding indication given into and taken out of the electronic business card. It has to be noted that the holder of the e-mail address book might have received the electronic business card from the holder of the electronic business card or from another person or in any further way.

In a preferred embodiment, the step of determining by means of the at least one entry, if a request for accessing the stored data is in accordance with the extent of permitted usage of the stored data further comprises receiving a request from one or more persons and/or entities for accessing the stored data, in particular for forwarding the stored data to the one or more persons and/or entities and comparing the request for accessing the stored data with the extent of permitted usage indicated by the at least one entry provided to the respective stored data.

In a preferred embodiment, the electronic database is provided by one or more providers, in particular by a first and a second provider, of the electronic database. In a preferred embodiment, the electronic database is provided by only one provider. In a preferred embodiment, the electronic database is provided both by a first and a second provider and/or by a further provider. For example, the owner or holder of an e-mail address book might be regarded as a first provider of the electronic database, namely the e-mail address book. The e-mail address book might be integrated into the account of the e-mail address book owner with an e-mail provider. The e-mail provider might be regarded as a provider of the e-mail address book, too, because the e-mail provider provides the means, in particular processing and storage means of the e-mail account including the e-mail address book of the e-mail address book holder, likewise. Therefore, the e-mail provider and the e-mail address book holder are providers of the electronic database, namely the e-mail address book. It has to be noted that the e-mail account has been mentioned for clarifying or illustrative purposes, so that also without regarding the e-mail account of the e-mail address book owner, the e-mail address book owner and the e-mail provider could be regarded as the provider or providers of the e-mail address book.

Similarly, each electronic database provided by a first provider of the electronic database which is integrated into a further electronic database provided by a second provider might be regarded as provided by the first provider of the electronic database and the second provider which provides both the electronic database and the further electronic database. If, for example, the electronic database, e.g. the e-mail address book is integrated into a cloud network provided by the e-mail provider, the e-mail provider is a provider of the cloud network and of the e-mail address book. Thus, one, two or even more providers of the electronic database might be implemented, wherein the electronic database might be integrated into or linked with one or more further electronic databases or not. Each of the providers of the electronic database, might have the means to provide one or more of the steps of protecting data stored into an electronic database according to the implementation. In further embodiments, the data stored into the electronic database might be transferred into one or more other electronic databases, wherein the electronic database from which the data have been transferred might still store or comprise the data or not.

In a preferred embodiment, the step of providing at least one entry in the electronic database to the stored data, the at least one entry indicating an extent of permitted usage of the stored data, is executed by the first provider of the electronic database and the steps of determining by means of the at least one entry, if a request for accessing the stored data is in accordance with the extent of permitted usage of the stored data and of denying the access to the stored data, if the request is not in accordance with the extent of permitted usage are executed by the second provider of the electronic database.

In a preferred embodiment, the one or more providers of the electronic database are one or more of an owner of an e-mail address book, of an e-mail provider and/or of a social and/or business network provider.

In a preferred embodiment, the data stored in the electronic database comprises one or more of: e-mail address, name, surname, prename, nickname, postal address, gender, age, birthday, hoppy, historical background, contacts, digital signatures, electronic name, twitter name, internet home page, telephone number etc. The data stored into the electronic database, e.g. in an e-mail address book or in a social or business network account, might be the data related directly to the provider of the electronic database, e.g. the holder of the e-mail address book or the member of the social or business network, and/or might be linked to further data stored into the electronic database. For example the name stored into the electronic database and protected by a corresponding entry indicating the extent of permitted usage might be the name of the provider of the electronic database, e.g. the holder of the e-mail address book or the member of the social or business network member who in particular has an account of the social or business network, but the name stored into the electronic database might be the name of a contact of e.g, the e-mail address book holder or social or business member. The same applies for the other data stored into the electronic database. Therefore, the data stored into the electronic database might be linked or combined with further data stored or linked into the electronic database. In a preferred embodiment the data stored into an electronic database might be one or more links to further data stored into same or one or more further electronic databases, wherein the one or more further electronic databases might be provided by one or more same and/or different providers and wherein the electronic databases might be provided one beside another or one or more of them integrated into another or any combination thereof. In a preferred embodiment, the electronic database is provided by the first and/or the second provider of the electronic database and wherein the electronic database is integrated into another electronic database provided by the first and/or second provider of the electronic database.

In a preferred embodiment, the electronic database or one or more of the electronic databases is one or more of an e-mail address book, electronic/digital telephone book, electronic database in a server, a cloud network, a SIM card including a data storage, each implemented in hardware and/or software.

The one or more persons and/or entities to whom the data are related are preferably the right holder of the personal data. For example, in case the data is the name of a person, said person might be defined as the person to whom the data is related, in particular because the person is the holder of the name and in more general terms the holder of the rights of the name. In further embodiments, the data might be related to one or more persons who are the one or more holders of the rights of the data. For example, in case the data refers to contact, this data might be seen as related both to the e.g. holder of the e-mail address book and the person who is actually the contact person, because both the e-mail address book holder and the contact person might be interested that it is not known by anyone else that the e-mail address book holder has said contact person as e-mail or personal contact, in particular stored into the e-mail address book.

In a preferred embodiment, the access to the stored data is denied, if the request is not in accordance with the extent of permitted usage. This denial of accessing the stored data might comprise to deny forwarding the stored data to the one or more persons and/or entities requesting the stored data to be forwarded and/or to further one or more persons and/or entities indicated by the one or more persons and/or entities requesting the forwarding. Alternatively of in addition the denial of accessing the stored data might comprise to deny forwarding one or more messages sent by the one or more persons and/or entities to the one or more persons and/or entities to whom the stored data are related. For example, a social network provider might send a request to an e-mail provider or to the holder of an e-mail address book to forward a message to each contact of the holder of the e-mail address book stored into the e-mail address book. In more general terms, the request might comprise to forward a message sent to a provider of an electronic database to one or more persons and/or entities of which corresponding data are stored into the electronic database.

In a preferred embodiment, the request to access data might be sent to and/or received by a first and/or a second provider of the electronic database. For example, the request sent by a social or private network provider might be sent to the holder of the e-mail address book to access the data stored into the e-mail address book and/or to the e-mail provider with which the holder of the e-mail address book has an account. In the latter case, the e-mail provider is requested to access the data stored into the e-mail address book. In the first case, the holder of the e-mail address book is requested to access the data stored into the e-mail address book.

In a preferred embodiment, the request for accessing the stored data is triggered by one or more messages referring to the one or more persons and/or entities to whom the stored data are related. In particular, the one or more messages are sent from the one or more persons and/or entities to whom the stored data are related to one or more persons or entities who after receipt of the one or more messages are sending the request for accessing the stored data. For example, a holder of an e-mail address book sends a message to a provider of a social network, in particular a message comprising to apply to become a member of the social network. Because of this message, the provider of the social network leans the e-mail address of the holder of the e-mail address book and then wants to get more information about the holder of the e-mail address book who is applying to get a member or who actually becomes a member by this application message. In either case, the provider of the social network based on the e-mail address of the holder of the e-mail address book, sends a request message to the e-mail provider where the holder of the e-mail address book has his e-mail account. The provider of the social network request from the e-mail provider to access the e-mail account of the holder of the e-mail address and to forward data stored into said e-mail account. This data are related (directly) to the holder of the e-mail address book and/or (indirectly) to further data related to further persons and/or entities. For example, stored data might include the name etc, of the holder of the e-mail account, but also the name and further information of contacts stored into the electronic database.

In a preferred embodiment, denying the access to the stored data comprises that the provider of the electronic database may technically be able to access the data stored in the electronic database, or may even be technically able to grant to one or more other persons and/or entities the access to the stored data, in the sense that the provider can read the stored data, but, preferably, the provider of the electronic database will not forward or otherwise process the stored data, in particular he will not grant the access to the one or more other persons and/or entities, even if it might be technically possible. This might be implemented in that the provider of the electronic database can technically read the stored data, even if the corresponding entry indicates that a particular processing of the data is not permitted. However, because of the denying entry, the provider, in particular by this processing means, does not implement the further processing. In particular the processing means of the provider might be adapted and accordingly programmed or otherwise directed or controlled that the further processing, in particular e.g, forwarding of the data with the corresponding entry indicating that the forwarding is not permitted, is not implemented, namely the data is not forwarded.

In preferred embodiments, denying the access to the stored data, if the request is not in accordance with the extent of permitted usage, the access to the data with the entry indicating that the access to the data is not permitted is technical not possible. This means, the data of the electronic database are protected against any kind of access, in particular forwarding and/or even reading, by the at least one entry indicating that the data or part or type or kind of data with the corresponding denying entry can not be accessed in any kind, e.g. read, forwarded etc. The protection of the data in the case that the access is technically not possible, even not by the provider and/or any other particular person and/or entity, might be implemented in any kind, digital signature, encryption, password and/or by programming the corresponding processing means that the data which are not permitted to access are filtered out in any technically possible way.

In a preferred embodiment, the permission of one or more persons and/or entities to access the data stored in an electronic database or the permission to forward data stored in an electronic database to these one or more persons and/or entities is given after and/or under the condition that these one or more persons and/or entities have been classified as trusted, in particular by a test and validation process. In particular in case of entities being application service providers, this means providers which offer an application or a service, such as e-mail, social/business network etc. they must be classified as trusted data protection providers for that the permission that they may access the stored data or that the data are forwarded to them is given. The permission might have been given in particular after and under the condition that these providers make their application interface transparent or after having joint a "test and validation" process. This classification, test and/or validation might be provided by a provider of the electronic database in which the data are stored to which the entry of permission is provided or not. Preferably, at least the provider of the electronic database has knowledge about the result of the classification, test and/or validation of the one or more persons and/or entities which have been classified as trusted or not.

### Brief description of the figures

The advantages of preferred embodiments of the present invention will be more completely understood when reading the following description in which
- Fig. 1: depicts schematically an electronic database for use in embodiments of a method of protecting data stored in an electronic database
- Fig. 2: is a block diagram depicting steps of a method of protecting data stored in an electronic database
- Fig. 3: is a block diagram depicting steps of a method of protecting data stored in an electronic database

### Detailed description

The following detailed description of preferred embodiments is meant for illustrative reasons only, while the scope of protection of the present invention is defined by the claims.

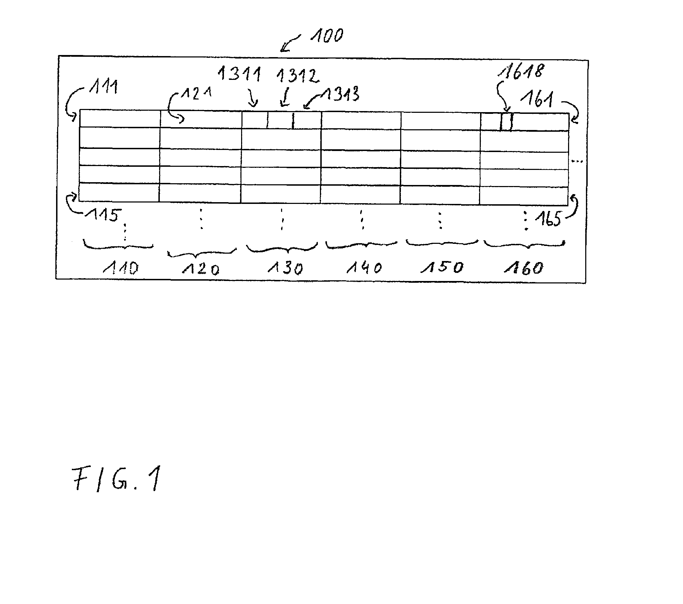

Fig. 1 depicts schematically an electronic database (100). In this exemplary embodiment, the electronic database (100) is an e-mail address book, which is hold by a person having an e-mail account which amongst further functions includes this storage for storing e-mail addresses and related data. The data is stored in columns (110, 120, 130, 140, 150, 160) and rows.

The implementation of an e-mail address book 100, in which entries are set to indicate the extent of permitted usage of the stored data might be very manifold. For illustrative reasons, two exemplary implementations of an e-mail address book 100 will be described in the following, each with reference to figure 1.

In a first rather simple embodiment of an e-mail address book comprising data and at least one entry indicating the extent of permitted usage, the data of a particular type or kind is stored in a particular column. The column 110 comprises just a numbering of the rows. The field 111 comprises the number #1, the field 115 comprises the number #5, the fields in the same column 110 between field 111 and field 115 comprises the numbers #2, #3 and #4, the fields below field 115 in the same column 110 comprises the following number #6 etc. corresponding to the number of the data stored. The column 120 comprises the e-mail addresses such as name.prename@provider.com. The column 130 comprises the corresponding names which normally are the real names corresponding to the official names according to official documents such as passport or identity card. Column 140 comprises the given name. Column 150 comprises further personal data, such as postal addresses, nicknames, hobbies, contacts etc. Column 160 includes the entry indicating an acknowledgement of accessing and further processing the data of a corresponding row. In this simple embodiment, the accessing and further processing of the data stored in the fields of a particular row might be the forwarding of the data to a person requesting the forwarding. In this simple embodiment, the acknowledgment is given in general for all data stored in a particular row and could therefore be a "Yes" or "No". A "Yes" means that all data stored in a corresponding row are permitted to be forwarded to any person requesting the data forwarding. A "No" means that the permission to forward the data or even a part thereof, e.g. only the name, stored in a particular row and therefore belonging to a particular e-mail address and eventually even the e-mail address itself is not given.

In a second, more sophisticated implementation, of an e-mail address book, the data of same kind is stored in a particular column similarly as in the above simple embodiment. However, each field does not only comprise the data such as name, prename, postal address etc. but also comprises at least one entry specifying the extent of permitted usage of this part of data. Therefore, in the fields of each row comprising data related to a particular e-mail address, a plurality of entries is provided assigned to the respective kind of data. The columns 120 ... 160 might be and usually are sub-divided into sub-columns, because the data stored into each row and into the e-mail address book as a whole is such detailed that there must be many columns or at least sub-columns.

The implementation of this second and complex e-mail address book will be described in detail in the following. Each row, for example the first row of the e-mail address book includes the data with reference to a particular e-mail address. The first column 110 still includes only the numbering of the particular row. Therefore, the field 111 comprises the input "e-mail contact #1". The field 115 comprises equivalently the input "e-mail contact #5". Referring again to the first row and the data related to the first e-mail contact, i.e. e-mail contact #1, right beside the field 111 with "e-mail contact #1", in the field 121 the e-mail address belonging to the first e-mail contact #1 is stored.

Therefore, the field 121 includes in this example the e-mail address name1.prename1@providerxy.com. The column 120 might include one or more further e-mail addresses of the same person and might therefore be sub-divided into a field 1211 and 1212, which is not depicted in fig. 1. The sub-division of a column, namely this column 120 or any further column 130 etc. is the more detailed the more entries, here different e-mail addresses exist. Alternatively or in addition, instead of sub-columns, the number of the columns might be enhanced corresponding to the number of the types of data to be stored in the e mail address book. In this context, it should bo created that any suitable structure of an e-mail address book or of any database in general might be implemented.

In this example, column 120 in the first row, i.e. the field 121 comprises one e-mail address as already stated, namely name1.prename1@providerxy.com. In column 130 the names are stored, in more detail the official name in the sense of surname, the prename, nicknames etc. Therefore, the column 130 is sub-divided into sub-columns according to the number of the fields needed, namely each field for each kind of name. In the case of three types of names, namely surname or name, pre-name and nickname, three fields 1311, 1312, 1313 are needed for the related data and entries. The field 1311 includes the official name, for example "name1", the field 1312 includes the (official) prename, for example "prename1", the field 1313 includes the nickname, for example "nickname1". It is apparent that the given nomination is chosen for simplicity and the official name is not name1, but an official name such as "Miller" or "Smith". The same applies for all the other examples of data given therein and for the e-mail address which does not have to be name1.prename1... but could be any wording (meaningful or pure fantasy). The columns 140, 150, 160 etc. comprise further data (hobbies, contacts etc.) related to the first e-mail contact #1 and might therefore be sub-divided into sub-columns with the respective fields.

In contrast to the first simple implementation, in the second implementation of an e-mail address book, in each field, there is an entry indicating, if this type of data is permitted to be accessed, the kind of access (e.g. only read or forwarded) and the one or more persons and/or entities which have the respective permission. Therefore, it is obvious that the entries in each field might be very complex and detailed. For example, in field 1311 related to name1, the entry could be as follows: "Person 'xy' is permitted to forward the name1 to person 'ab', person 'cd' is permitted to read the 'name' and store for own use, person 'mn' is permitted to use the name for advertising reasons, for example to sent advertisement post to the person with the name "name1". In another field comprising the age of the respective person to which the e-mail address #1 belongs, might be indicated for example that the information of the age is permitted to be forwarded to a specified group of persons or entities, but only for statistical reasons. The entries and the data might be set in any way comprising coding and/or encryption, in long wording or in short terms, abbreviation etc. This applies in general for all data stored in every kind of electronic database. The age of the person might be stored in column 140 or in a particular sub-column, where in the resulting field of first row which is currently described such an entry might indicate that the data of age, but without the name - related to e-mail address #1 - is permitted to be accessed for statistical purposes and the reference to the e-mail address must not be forwarded or at least deleted after the statistical processing.

It is obvious that the entries and the given permission of usage indicated by the entries might be very detailed. However, in practical scenarios, the person to which the e-mail address #1 belongs, might just give the following permission: "The name must not be forwarded (no permission), the hobbies might be forwarded on request by persons requesting this information, the age is permitted to be forwarded only for statistical purposes without reference to the further data, any other data stored in the database must not be accessed in any kind by any person or entity requesting this.

In a third implementation of an exemplary e-mail address book, slightly varying from the second implementation, there are columns 110, 120, 130, 140 and 150 comprising the data as described above, but without entry indicating the permitted usage which is only indicated in column 160 which for this reason might be very large. This column 160 might then include a reference to the data stored in columns 120 - 150, such as "name" or an abbreviation "n" for "name", or the number of the column or field and then indicate the permitted usage. For example, column 160, eventually in one of the many sub-columns of column 160 might indicate in a field 1618, which belongs to the first row and therefore relates to the first e-mail contact #1, and which references to the name of this first e-mail contact for example by the abbreviation "n" that the name is permitted to be forwarded to social networks requesting this forwarding, the resulting entry in field 1618 would be such as: "n: forwarding to social networks on request (yes)". This means no other use or access of the name is permitted, consequently, a request which in not in accordance with the extent of permitted usage is denied.

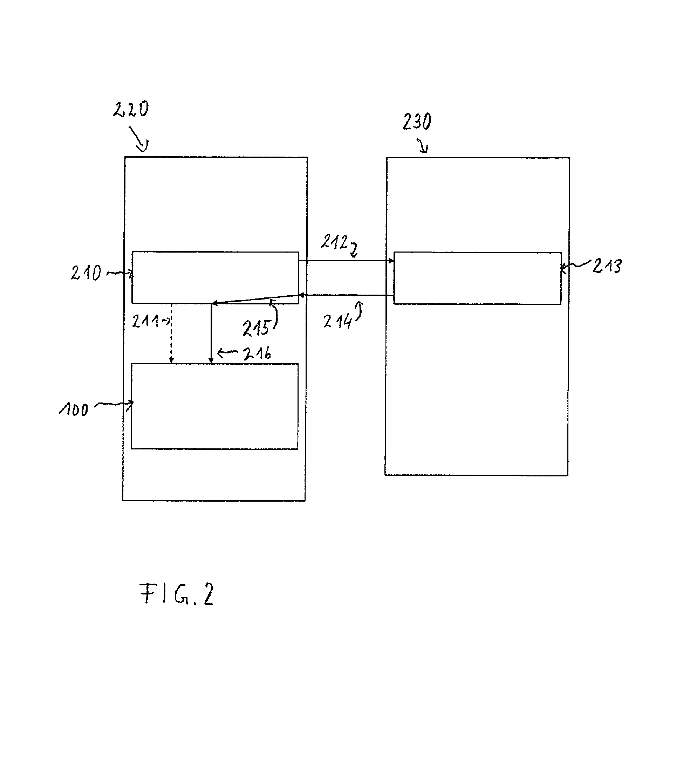

Fig. 2 depicts steps of providing entries into the e-mail address book. To give an overview, the steps comprise presetting 211 an input of the data stored in the electronic database 100, sending 212 a request to the one or more persons 213 and/or entities to whom the data to be stored in the electronic database 100 are related requesting to send an acknowledgement message defining the extent of permitted usage of the data related to said one or more persons 213 and/or entities, receiving 214 the acknowledgement message from the one or more persons 213 and/or entities to whom the data to be stored in the electronic database are related, determining 215 by the acknowledgement message the extent of permitted usage of the stored data and finalizing 216 the input of the data stored in the electronic database 100 by setting at least one entry indicating the permitted usage in relation to the data stored in the electronic database 100.

The electronic database 100 in this example is an electronic e-mail address book 100. The person who holds this e-mail address book 100 is the e-mail address book holder 210. Now, the e-mail address book holder 210 wants to set a new e-mail contact. Therefore, he presets 211 the new e-mail contact in the e-mail address book 100 by setting for example a new entry with a new number and eventually the e-mail address of the new e-mail contact. This is the e-mail address of the person 213 to whom the e-mail address refers. Then the e-mail address book holder 210 sends 212 a request to the person 213, because the e-mail address book holder 210 wants to know, if the person 213 agrees in that the e-mail address book holder 210 stores data related to the person 213 into the e-mail address book 100, and more specifically which data and with witch extent of permitted use of the data for further purposes, in particular forwarding to other persons. Therefore, the e-mail address book holder 210 sends an acknowledgement request to person 213 requesting to define the extent of permitted usage of the data which are related to person 213. The person 213 might be a natural person who might be a member of an internet application 230 such as a social or business network or an e-mail provider. Assuming that the person 213 is cooperative, the e-mail address book holder 210 will receive a more or less detailed acknowledgement message from the person 213. In case, person 213 does not sent back any acknowledgement message to e-mail address book holder 210, this shall be understood as a total denial of any permitted usage of data related to person 213. In this example, the holder of the e-mail address book 100 has an e-mail account with an e-mail address book 100 with an e-mail provider 220 and the person 213 to which the data are related is a member of the application 230.

In further embodiments, the internet application 220 and the internet application 230 might be any same or different internet application, in particular e-mail server, internet, in particular social and/or business, network, etc. In preferred embodiments, the internet application 220 and the internet application 230 might be identical, in particular when providing restricted applications for each member of the internet application. In a more general aspect, the application 220 and/or 230 and/or further applications might be any application providing one or more electronic databases within or linked thereby.

Referring back to figure 2, the e-mail address book holder 210 will after reception 214 of the acknowledgment message from person 213 determine 215 the extent of the permitted usage of data related to person 213. In more detail, the acknowledgment message received from person 213 will contain to each type or kind of data the corresponding permitted usage or maybe a general permission or denial of permission. According to the information given by the acknowledgement message, the e-mail address book holder 210 can now determine which entries, i.e. yes/no/further specified as explained in detail above, he can and should assign into the e-mail address book to the stored data related to person 213. By setting the one or normally more/many entries into the respective fields of the e-mail address book 210, the e-mail address book holder 210 finalizes 216 the input of the data stored into the e-mail address book 100.

A manifold of variations to this embodiment might be implemented or perceived. In a preferred embodiment, the e-mail address book holder 210 already knows the data that he wants to store into the e-mail address book 100, more precisely the data related to person 213. However, the e-mail address book holder 210 does not yet know, to which extent the person 213 permits the further usage of the data. In this case, the presetting 211 of the new e-mail contact related to the person 213 might already comprise to set the data into the database or not. For example, the data might be set into a restricted file or field of the e-mail address book, a kind of draft file which might and should be excluded for any access from outsight. Alternatively, the e-mail address book holder might only set the numbering of the new e-mail contact into the e-mail address book or maybe the e-mail address of the person 213, because he knows that person 213 is supposed to agree at least in that the e-mail address of person 213 is stored in an e-mail address book. This particular agreement might be seen as given because person 213 sent an e-mail to e-mail address book holder 210 or just by the use of an e-mail address by person 213 and so implicitly agreeing in that the mere existence of the e-mail address might be known by anyone in the e-mail or internet world. In another preferred embodiment, the person 213 might only within the acknowledgment message sent data related to person 213 to the e-mail address book holder 210 indicating to which extent person 213 might use the sent data related to person 213. The e-mail address book holder 210 will after reception of the data and the related permitted usage of the data or kind of data set the corresponding entries into the e-mail address book 100.

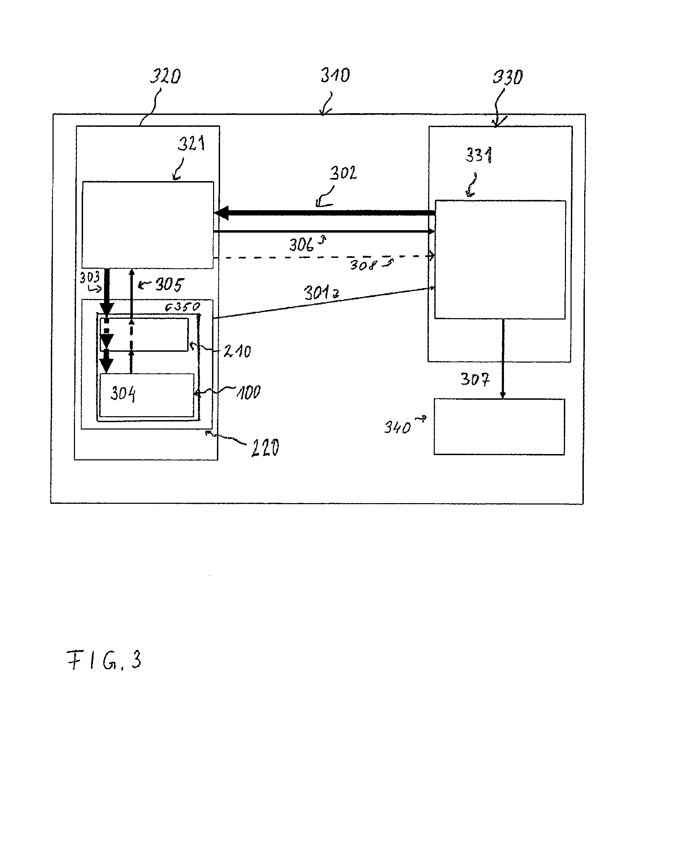

Fig. 3 depicts amongst other features of a preferred embodiment in particular steps of determining by means of the at least one entry, if a request for accessing the stored data is in accordance with the extent of permitted usage of the stored data and denying the access to the stored data, if the request is not in accordance with the extent of permitted usage.

Fig. 3 depicts on the left side an internet application, namely an e-mail provider 320 and on the left side a further internet application, namely a social network provider 330, both situated in the Internet environment 310. The e-mail address book holder 220 already depicted in fig. 2, holds an e-mail account with e-mail provider 320. Thus e-mail address holder 220 has an e-mail address book 100 and the device 210 comprising processing means for processing data in relation with the e-mail address book 100. The social network provider 330 might implement the steps of the described method in particular by means of a processing unit 331, which might be implemented by software, hardware or a combination thereof.

The e-mail address book holder 220 is interested to become a member of the social network hold by social network provider 330 and therefore sends a membership message 301 to the social network provider 330 by an e-mail including, of course, the e-mail address of e-mail address book holder 220, namely e.g, "holdername.holderprename@provider.com". In further embodiments, the message 301 might be any message sent by e-mail address book holder 220 to social network provider 330. In either case, because of the message 301, the social network provider 330 now knows the e-mail address of e-mail address book holder 220 and is interested to get more information about e-mail address book holder 220, namely about the e-mail address book holder 220 himself, and in particular about the e-mail contacts of e-mail address book holder 220. Therefore, the social network provider 330 wants to look and crawl into the e-mail address book 100 of e-mail address book holder 220. As the e-mail address book holder 220 has an e-mail address provided by e-mail provider 320, the social network provider 330 sends a request message 302 to e-mail provider 320. The request message 302 is depicted in fig. 3 by a thick arrow symbolizing that the social network provider 330 wants to know many data about e-mail address book holder 220. In further embodiments, the arrow referenced by 302 might symbolize a plurality of request messages related to a plurality of persons of whom the social network provider 330 has got knowledge about the e-mail addresses and sends respective request messages to e-mail provider 320. In another different embodiment, the social network provider 330 might send the request message 302 directly to the e-mail address book holder 220. In a more general aspect, the internet applications 320 and 330 might be any application which stores or processes data related to one or more persons and/or entities.

In a further preferred embodiment, the request message 302 might contain an access code to the e-mail address book 100, which is used to determine that the requesting social network provider 330 is enabled, in particular permitted, to access the e-mail address book. In this particular embodiment the access code comprised by the request message 302 might be compared with the entry provided to the data stored in the e-mail address book 100 which are secured by the holder 220 of the e-mail address book 100 and/or the e-mail provider 320 against any access by the holder 220 of the e-mail address book 100 itself or any other third party access without access code. Based and because of the access code the social network provider 330 is enabled to access to the stored data according to the access specified by the entry into the electronic database 100, wherein the access might be in particular provided by forwarding the stored data by the e-mail provider 320 to the social network provider 330 or by any further way indicated by the corresponding entry in accordance with the access code.

In a further embodiment, the request message 302, could also be sent via an user interface, in particular the user interface or the e-mail account of e-mail address book holder 220 to the e-mail provider 320. In this embodiment, the request message 302 sent from the social network provider 330 via the e-mail account of e-mail address book holder 220 to the e-mail provider 320, might be processed in such a way that the e-mail provider 320 can determine that the social network provider 330 is permitted to access, in particular by data forwarding to him, the e-mail address book 100. This might be done merely by forwarding the request message 302 from the social network provider 330 by the holder 220 of the e-mail address book 100 via the respective interface of the e-mail account of the e-mail address book holder 220 to the e-mail provider 320 and/or by any further indication, e.g. assigning an access code for the social network provider 330 to the request message 302 forwarded from the holder of the e-mail address book 100 to the request message 302. In this embodiment, the corresponding entry in the e-mail address book 100 might be such that any request 302 might be permitted to access, in particular by data forwarding in the above described manner, if the request message 302 is processed in the aforementioned way, forwarding via interface of e-mail address book holder 220 and/or assigning of an access code.

Referring back to fig. 3, the e-mail provider 320 receives, in particular - in this step and along the whole description - by its processing means 321, the request message 302. In further processing, the e-mail provider 320 determines to which extent he will access, and therefore in particular to which extent he is permitted to access, to the data stored in the e-mail address book 100 and in particular forward data to the social network provider 330.

The e-mail provider 320 retrieves out of the e-mail address book 100, the data requested if and in so far the extent of permitted usage indicated by the corresponding entries permits the requested access, in particular, the forwarding to social network provider 330. The detailed processing of how it is determined if data or part of data are permitted to be accessed and forwarded has been described in detail in the context of figure 1 and applies correspondingly in this scenario. The step of determining the extent of permitted usage by in particular comparing the request for accessing the stored data with the extent of permitted usage indicated by the at least one entry provided to the respective stored data and the consecutive filtering out of the data to be accessed and in particular forwarded to social network provider 330 and the data of which the access is denied, because the request is not in accordance with the extent of permitted usage is referenced in the exemplary embodiment in figure 3 by the reference signs 303, 304, 305 and 306. In more detail, the e-mail provider 320, by its processing means 321, accesses, in particular looks 303 into the e-mail address book 100, compares 304 the request with the extent of permitted usage indicated with the corresponding entry for the particular data, this will be for one or usually many specific data requests, retrieves 305 the data of out of the e-mail address book 100 permitted to be accessed and forwarded and sends the respective data and/or the denial of the requested forwarding in relation to specific data to the social network provider 330. The social network provider 330 might then use the data forwarded to him from e-mail provider 320 for further processing. For example, he has requested to get information about the e-mail contacts of e-mail address book holder 320 stored into the e-mail address book 100 of e-mail address book holder 320. Assuming, that part of the e-mail contacts stored into e-mail address book 100 had given their permission in that their e-mail address might be forwarded on request to social network providers, the social network provider 330 will now have received these e-mail addresses of the e-mail contacts of e-mail address book holder 320. The social network provider 330 might then for example send invitation messages 307 to these e-mail contacts 340, namely to their respective e-mail addresses. As some of the e-mail contacts stored in e-mail address book 100 of e-mail address book holder 220 had not given their agree in the forwarding to in particular social network providers and as therefore in the processing described in detail in reference to figure 2, in the respective fields of e-mail address book 100 related to these e-mail contacts, entries indicating "no" permission to forwarding (or no entries indicating "yes" to the permission to forwarding according to the implementation) are set, the respective access had been denied by e-mail provider 320 who accordingly did not retrieve 305 these data out of the e-mail address book 100, but denied the forwarding to requesting social network provider 330.

The denial of access to the data stored in the e-mail address book 100 might be implemented in that the data is not included within the data retrieved 305 out of the e-mail address book 100. The denial of access might be in addition or alternatively regarded in that the data denied is not included into the data sent 306 to the social network provider 330. The denial of access might alternatively or in addition be implemented by a denial message 308 sent to social network provider 330. The denial message 308 comprises the message that the respective data access is denied. In this example, the data sent 306 to social network provider 330 do not comprises the e-mail addresses of the e-mail contacts with the respective denial entry. Therefore, the arrow 306 symbolizing also the data forwarding to social network provider 330 is less thick than the request message 302, because the data forwarded are less.

As already mentioned, contemporaneously, the arrow 306 might symbolize a denial message sent to social network provider 306. However, the step of deny the access to the requested data might also seen already by step 305, because only a part of the requested data has been retrieved out of e-mail address book 100, or already during the step symbolized by reference sign 304, in which it is determined actually that in regard to the data with the "no"-forwarding entry (for short) the access or at least the forwarding and/or retrieving of the data has been denied.

According to the implementation, a manifold of embodiments and variations thereof, beside and above those already disclosed, might be made or conceived without departing from the scope of the invention, only some of these might be named in the following.

In a preferred embodiment, the determining by means of the at least one entry, if a request for accessing the stored data is in accordance with the extent of permitted usage of the stored data and/or the deny the access accordingly and/or further steps might be implemented by the processing unit 321 of e-mail provider 320 and/or by the processing unit 210 of e-mail address book holder 220. The processing unit 321 and the processing unit 210 might process together or might even be implemented as a combined or integrated processing device. In addition, according to the implementation, already by the processing unit 210 alone, the steps of the method of protecting data might be implemented. In particular, the processing unit 210 might be adapted to receive 302 the above described requests, determine 303, 304, 305 the permission of data access and deny 306, 308 the non-permitted access. Similarly, providing at least one entry in the electronic database 100 indicating the extent of permitted usage, might be implemented by the processing unit 210 of e-mail address book holder 220 as described in the context of figure 2 and/or by the processing unit 321 of the e-mail provider 320, as far as he has the means and the permission to provide the respective entry in the database. This last scenario might be in particular be realised in case the electronic database 100 is rather not hold by e-mail address book holder 220 in his own private e-mail account, but in a cloud network to which the e-mail provider 320 had transferred all or parts of the data and electronic environment provided by him, including the electronic database which comprises the e-mail address book of e-mail address book holder 220. Further implementations might be conceived of one or more databases comprising the e-mail address book of e-mail address book holder 220. In particular, a first database comprising the e-mail address book might be incorporated into a second database comprising the first database and/or the e-mail address book 100. Alternatively or in addition, entries indicating the extent of permitted usage might have been provided by a first provider and the determining of the permitted access due to respective requests and the forwarding or denying might be implemented by a second provider which has access to the e-mail address book. Actually, the above described embodiment might be regarded as such a case, as and so far the e-mail address book 100 has been provided with corresponding entries by the e-mail address book holder 220 and the determining of the permitted access and/or forwarding and/or the denying thereof has been implemented by the e-mail provider 320, in particular by its processing means 321.

In further embodiments, the determining step and denying step and further steps of the present invention might be implemented by the e-mail address book holder 220 by himself, in particular by his processing means 210. For example, respective request message might be sent to the e-mail address book holder 220 and his processing means 210 might be adapted, in particular by corresponding programming, to implement the determining and further steps.

To implement the steps or part of the steps of the method of protecting data stored in an electronic database, in particular at least a processing unit is used. This processing unit might be the processing unit 321 of e-mail provider 320 and/or the processing unit 210 of e-mail address book holder 220 and/or further devices according to the implementation. This at least one processing unit is adapted to provide at least one entry in the electronic database to the stored data, the at least one entry indicating an extent of permitted usage of the stored data, to determine by means of the at least one entry, if a request for accessing the stored data is in accordance with the extent of permitted usage of the stored data and to deny the access to the stored data, if the request is not in accordance with the extent of permitted usage.

In further embodiments, a processing unit, e.g. 210, and the electronic database, e.g. 100, might be integrated in a device, e.g. 350 (fig. 3). In this case, the device comprises at least one processing unit and an electronic database and is adapted to provide, in particular by means of the processing unit 210, to provide at least one entry in the electronic database 100 to the stored data, the at least one entry indicating an extent of permitted usage of the stored data, to determine by means of the at least one entry, if a request for accessing the stored data is in accordance with the extent of permitted usage of the stored data and to deny the access to the stored data, if the request is not in accordance with the extent of permitted usage.

In a preferred embodiment, the device 350, in particular by its processing unit 210, might control the access to the data stored in the electronic database (100), in particular in the e-mail address book 100. The device 350 is therefore adapted to determine by means of at least one entry 111, 121...161, 1311, 1312, 1313... , 1618 provided to the stored data and indicating an extent of permitted usage of the stored data, if a request for accessing the stored data is in accordance with the extent of permitted usage of the stored data and to deny the access to the stored data, if the request is not in accordance with the extent of permitted usage.

In particular, the device 350 might comprise the electronic database 100 or one or more further electronic databases or might not comprise the electronic database 100 or any further electronic databases. The device might comprise a processing unit, e.g. the processing unit 210, or not. The device 350 might be combined and/or linked with the electronic database 100 and/or a processing unit 210 or not.

The device 350 and/or the processing unit 210 and/or 321 might be implemented as separate devices, as a single unit, a stand-alone device, or within a database, in particular different from the electronic database 100 or combined therewith, integrated in a computer and/or within a computer network. The device 350 and/or the processing unit 210 and/or 321 and further the processing means 331 may be implemented through the use of hardware, software and/or hardware capable of executing software in association with appropriate software.

More specifically, the device 350 and/or the processing unit 210 and/or 321 and/or 331 can be comprised or implemented by circuit-based processes, including possible implementation as a single integrated circuit, such as an ASIC (= Application Specific Integrated Circuit) or such as an FPGA (= Field Programmable Gate Array), a multi-chip module, a single card, or a multi-card circuit pack. The functions of the device 350 and/or the processing unit 210 and/or 321 and/or 331 may be implemented as processing blocks in a software program. Such software may be employed in a digital signal processor, microcontroller, or general-purpose computer implemented as a single device or integrated in a computer network.

The device 350 and/or the processing unit 210 and/or 321 and/or 331 may comprise program code embodied in tangible media, such as magnetic recording media, optical recording media, solid state memory, floppy diskettes, CD-ROMs, hard drives, or any other machine-readable storage medium, wherein, when the program code is loaded into and executed in the control unit, the control unit becomes an apparatus used for practicing the invention. In particular, a computer program product adapted to execute the method of one of the claims 1 to 14, when executed on a computer might be implemented, in particular by or within the device 350 and/or the processing unit 210 and/or 321 and/or 331.

## Claims

1. A method of protecting data stored in an electronic database (100), the method comprising the steps of:
- providing (216) at least one entry (111, 121...161, 1311, 1312, 1313... , 1618) in the electronic database (100) to the stored data, the at least one entry (111, 121...161, 1311, 1312, 1313... , 1618) indicating an extent of permitted usage of the stored data;
- determining (303, 304) by means of the at least one entry (111, 121...161, 1311, 1312, 1313... , 1618), if a request (302) for accessing the stored data is in accordance with the extent of permitted usage of the stored data; and
- denying (308) the access to the stored data, if the request (302) is not in accordance with the extent of permitted usage.

2. The method according to claim 1, wherein the at least one entry (111, 121...161, 1311, 1312, 1313... , 1618) indicating an extent of permitted usage of the stored data comprises:
- one or more persons and/or entities (320) which are permitted to access, in particular to forward (306), the stored data or a portion of the stored data;
- one or more persons and/or entities (330), to which the stored and accessed data are permitted to be forwarded (306);
- one or more applications for which the stored data are permitted to be accessed and/or processed, in particular forwarded; and/or
- one or more types (120 ... 160) and/or portions of the stored data which are permitted to be accessed and/or processed, in particular forwarded.

3. The method according to claim 1, wherein the step of providing at least one entry (111, 121...161, 1311, 1312, 1313... , 1618) in the electronic database (100) comprises:
- determining (215) the extent of permitted usage of the data stored in the electronic database (100);
- setting (216) the at least one entry (111, 121...161, 1311, 1312, 1313..., 1618) to the data stored in the electronic database (100) based on the determined extent of permitted usage.

4. The method according to claim 3, wherein the step of determining (212, 214, 215) the extent of permitted usage of the data stored in the electronic database (100) further comprises:
- sending (212) a request to the one or more persons (213) and/or entities to whom the data stored in the electronic database (100) are related, the request requesting to send an acknowledgement message defining the extent of permitted usage of the data related to said one or more persons (213) and/or entities;
- receiving (214) the acknowledgement message from the one or more persons (213) and/or entities to whom the data stored in the electronic database (100) are related;
- deriving (215) out of the acknowledgement message the extent of permitted usage of the data stored in the database (100).

5. The method according to claim 3, wherein the step of providing at least one entry (111, 121...161, 1311, 1312, 1313... , 1618) to the data stored in the electronic database (100) based on the determined extent of permitted usage further comprises the step of
- presetting (211) at least one entry to the data stored in the electronic database (100) before determining (215) the extent of permitted usage of the data stored in the electronic database (100).

6. The method according to claim 1, wherein the step of providing at least one entry (111, 121...161, 1311, 1312, 1313... , 1618) in the electronic database (100) comprises:
- deriving the extent of permitted usage out of an indication of the permitted extent of usage received in connection with the data to be stored in the electronic database (100);
- storing the received data to be stored in the electronic database (100) in the electronic database (100); and
- setting (216) the at least one entry (111, 121...161, 1311, 1312, 1313..., 1618) to said data based on the extent of permitted usage derived out of the indication.

7. The method according to claim 1, wherein the step of determining (303, 304) by means of the at least one entry (111, 121...161, 1311, 1312, 1313... , 1618), if a request for accessing the stored data is in accordance with the extent of permitted usage of the stored data comprises:
- receiving (302) a request from one or more persons and/or entities (330) for accessing the stored data, in particular for forwarding (306) the stored data to the one or more persons and/or entities (330); and
- comparing (304) the request for accessing the stored data with the extent of permitted usage indicated by the at least one entry (111, 121...161, 1311, 1312, 1313... , 1618) provided to the respective stored data.

8. The method according to claim 1, wherein the electronic database (100) is provided by one or more providers, wherein in particular the step of providing at least one entry (111, 121...161, 1311, 1312, 1313... , 1618) in the electronic database (100) to the stored data, the at least one entry (111, 121...161, 1311, 1312, 1313... , 1618) indicating an extent of permitted usage of the stored data, is executed by a first provider (220) of the electronic database (100) and the steps of determining (303, 304) by means of the at least one entry (111, 121...161, 1311, 1312, 1313..., 1618), if a request (302) for accessing the stored data is in accordance with the extent of permitted usage of the stored data and of denying (308) the access to the stored data, if the request (302) is not in accordance with the extent of permitted usage are executed by a second provider (320) of the electronic database (100).

9. The method according to claim 1, wherein the electronic database (100) is provided by one or more providers (220, 320), wherein the one or more providers (220, 320) of the electronic database (100) are one or more of an owner of an e-mail address book (220), of an e-mail provider and/or of an social and/or business network provider.

10. The method according to claim 1, wherein the data stored in the electronic database (100) comprises one or more of: e-mail address, name, surname, prename, nickname, postal address, gender, age, birthday, hoppy, historical background, contacts, digital signatures, electronic name, etc.

11. The method according to claim 1, wherein the electronic database (100) is one or more of an e-mail address book, electronic database in a server, a cloud network, a SIM card including a data storage, each implemented in hardware and/or software.

12. The method according to claim 1, wherein the electronic database (100) is provided by a first and/or a second provider of the electronic database (100) and wherein the electronic database (100) is integrated into another electronic database provided by the first and/or second provider of the electronic database (100).

13. The method according to claim 1, wherein the request (302) for accessing the stored data is triggered by one or more messages (301) referring to the one or more persons (220) and/or entities to whom the stored data are related, in particular one or more messages (301) sent from the one or more persons (220) and/or entities to whom the stored data are related to one or more persons or entities (330) sending the request for accessing the stored data.

14. A device (350) for controlling the access to data stored in an electronic database (100), the device (350) being adapted to determine by means of at least one entry (111, 121...161, 1311, 1312, 1313... , 1618) provided to the stored data and indicating an extent of permitted usage of the stored data, if a request for accessing the stored data is in accordance with the extent of permitted usage of the stored data and to deny the access to the stored data, if the request is not in accordance with the extent of permitted usage.

15. A computer program product adapted to execute the method of one of the claims 1 to 13, when executed on a computer.
